# EUROPÄISCHE PATENTANMELDUNG

(11) **EP 1 892 353 A1**
(43) Veröffentlichungstag der Anmeldung: **27.02.2008**
(21) Anmeldenummer: 07114246.7
(22) Anmeldetag: 13.08.2007
(51) Int. Cl.: E04F 15/04, F16B 5/00, F16B 12/12, E04B 5/12

(54) **Vorrichtung zur Befestigung von Bohlen auf einer Unterkonstruktion**

(30) Priorität: 19.08.2006 DE 202006012772 U
(71) Anmelder: Stefan Ehrenreich GmbH, 86465 Welden (DE)
(72) Erfinder: Ehrenreich, Stefan, 86465 Welden (DE)
(74) Vertreter: Charrier, Rapp & Liebau

(57) **Zusammenfassung**

Die Erfindung betrifft eine Vorrichtung zur äquidistanten Befestigung von Bohlen (1) auf einer Unterkonstruktion (2), mit einer Platte (3) zum Eingriff in randseitige Nuten (4) zweier benachbarter Bohlen (1), welche eine etwa mittig angeordnete Bohrung zum Durchtritt einer Schraube (5) zum Einschrauben in die Unterkonstruktion (2) aufweist, sowie mit mindestens einem ersten Abstandshalter (6) zum Einhalten des Abstands zwischen der Platte (3) und der Unterkonstruktion. Die Aufgabe, eine Beplankung zu erhalten, die eine möglichst lange Lebensdauer aufweist, leicht repariert und instand gesetzt werden kann und ein ansprechendes Aussehen aufweist, löst die erfindungsgemäße Vorrichtung durch mindestens einen weiteren Abstandshalter (7) zur Einfügung zwischen die Unterseite zweier benachbarter Bohlen (1) und die Unterkonstruktion (2).

## Beschreibung

Die Erfindung betrifft eine Vorrichtung zur äquidistanten Befestigung von Bohlen auf einer Unterkonstruktion nach dem Oberbegriff des Anspruchs 1.

Aus dem Stand der Technik sind eine Reihe von Befestigungssystemen- und Vorrichtungen zur Befestigung von Bohlen bzw. Dielen oder Brettern auf einer Unterkonstruktion bekannt. So zeigt die US 6,810,633 B2 eine Befestigungsvorrichtung zur Sicherung der Befestigung benachbarter, paralleler Bretter bzw. Bohlen auf einer hierzu transversale verlaufende Unterkonstruktion. Hierbei handelt es sich um eine aus Metall bestehende Einheit mit einer Metallplatte zum Eingriff in randseitige Nuten zweier benachbarter Bohlen, welche eine etwa mittig angeordnete Bohrung zum Durchtritt eine Senkkopfschraube aufweist, die wiederum in die Unterkonstruktion, welche aus Holz besteht, eingeschraubt wird. Senkrecht zu der Metallplatte weist das integrierte Metallstück einen Abstandshalter auf, der ebenfalls als Platte ausgebildet ist und links und rechts von der Schraube verläuft. Dieser definiert den Abstand zwischen der Metallplatte und der Unterkonstruktion. Durch Einschrauben der Senkkopfschraube durch die Vorrichtung in die Unterkonstruktion bei angesetzten Bohlen findet aufgrund der Elastizität der Metalleinheit eine Verspannung statt.

Nachteilig bei dieser Konstruktion ist, dass benachbarte Bohlen einen Abstand zueinander aufweisen, der durch die Vorrichtung selbst definiert und auch nötig ist, um die Senkkopfschraube bei angesetzten Bohlen betätigen zu können. Durch diesen Abstand dringt, zum Beispiel bei einer Deck- oder Terrassenbeplankung, Wasser ein, welches zur Fäulnis des Bereichs zwischen Bohlen und Unterkonstruktion und damit zu einer nur kurzen Lebensdauer der gesamten Beplankung führt.

Ein ähnliches System, welches gleichwohl erheblich komplizierter ausgestaltet ist, ist Gegenstand der US 7,052,200 B2. Dieses System weist die gleichen Nachteile auf, insbesondere was die relativ kurze Lebensdauer der Beplankung betrifft.

Auf dem Markt sind ferner verschiedenste Befestigungssysteme für Dielen auf einem Untergrund, welche in der Regel Metallteile aufweisen, die in die Unterkonstruktion eingeschraubt werden und die Bohlen darauf festhalten. Diese bekannten Konstruktionen definieren entweder den Abstand zwischen benachbarten Bohlen nicht exakt oder die benachbarten Bohlen weisen überhaupt keinen Abstand zueinander auf, so dass ein nachträgliches Festziehen der Schrauben unmöglich ist. Werden die Schrauben durch die Bohlen selbst geführt, besteht erhebliche Verletzungsgefahr an den freiliegenden Schraubköpfen, insbesondere wenn sich das Holz zusammengezogen hat und die Schraubenköpfe frei liegen.

Bekannte Vorrichtungen offenbaren auch die DE 102 30 797 C2, DE 10 2004 009 054 A1, FR 2 836 499, FR 2, 817 891, US 7 052 200 B2, US 2004/0020152 A2, EP 1 700 966 A1, EP 1 600 579 A1 und US 6 402 415 B1.

Es besteht daher die Aufgabe, eine gattungsgemäße Vorrichtung so weiterzubilden, dass die Beplankung eine möglichst lange Lebensdauer aufweist, leicht repariert und instand gesetzt werden kann und ein ansprechendes Aussehen aufweist.

Gelöst wird diese Aufgabe mit den kennzeichnenden Merkmalen des Anspruchs 1. Vorteilhafte Ausgestaltungen sind den Unteransprüchen entnehmbar.

Ein Ausführungsbeispiel der Erfindung wird im folgenden unter Bezugnahme auf die begleitenden Zeichnungen näher erläutert. Diese zeigen:
- **Figur 1**:: Eine teilweise im Schnitt dargestellte Draufsicht auf eine Unterkonstruktion mit zwei nebeneinander verlegten Bohlen und zwei erfindungsgemäßen Befestigungsvorrichtungen; und
- **Figur 2:**: Eine Querschnittsdarstellung der in Figur 1 dargestellten Konstruktion von der Seite.

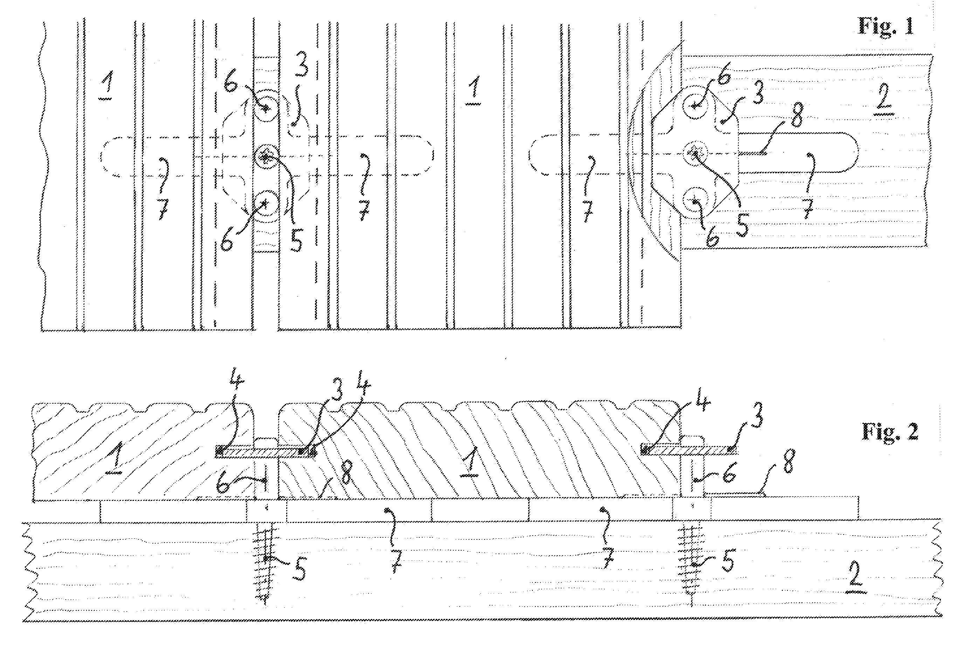

Beide Figuren zeigen die erfindungsgemäße Befestigungsvorrichtung jeweils zweimal, und zwar einerseits (links im Bild) mit zwei daran angeordneten Bohlen 1 und andererseits (rechts im Bild) während des Einbaus mit nur einer daran angesetzten Bohle 1 und einer offenen Seite, an welcher eine weitere Bohle 1 anzusetzen ist. Die Figuren zeigen eine Unterkonstruktion 2, welche im wesentlichen transversal zur Richtung der darauf aufzubringenden Bretter, Dielen bzw. Bohlen 1 verläuft und in der Regel ebenfalls aus Holz besteht. Auf diese transversal verlaufende Unterkonstruktion werden die Bohlen 1, welche im dargestellten Ausführungsbeispiel an ihrer Oberseite mit Längsriffelungen versehen sind, aufgelegt, und zwar über die erfindungsgemäßen Befestigungsvorrichtungen. Diese weisen jeweils eine Metallplatte 3 auf, welche - ausgehend von einer Rechteckform - an den Ecken abgeschreckt ist und in randseitige Nuten 4 der Bohlen 1 eingreift, wie es am besten in Figur 2 zu sehen ist. Etwa in ihrer Mitte weist die Metallplatte 3 eine Bohrung bzw. ein Loch auf, durch welches eine Holzschraube 5, zum Beispiel eine Senkkopfschraube geführt werden kann. Ferner weist die erfindungsgemäße Befestigungsvorrichtung zwei Abstandshalter 6 auf, welche als zylindrische Kunststoffzapfen ausgebildet sind und von der Metallplatte 3 nach unten in Richtung auf die Unterkonstruktion 2 verlaufen. Diese ersten Abstandshalter 6 dienen der Einhaltung eines konstanten Abstands zwischen der Metallplatte 3 und der Unterkonstruktion 2. Weiter dienen die ersten Abstandshalter 6 auch der Einhaltung eines konstanten Abstands zwischen zwei nebeneinander liegenden Bohlen 1.

Darüber hinaus weist die erfindungsgemäße Vorrichtung einen weiteren, als längliche Scheibe ausgebildeten, und aus Kunststoff bestehenden Abstandshalter 7 auf, der ebenfalls in seiner Mitte eine Bohrung aufweist, durch welche die Schraube 5 tritt. Dieser Abstandshalter wird unter jeweils zwei benachbarte Bohlen 1 eingelegt und dient der Einhaltung eines konstanten Abstands zwischen den Bohlen 1 und der Unterkonstruktion 2. Die Dicke der weiteren Abstandshalter 7 ist so gewählt, dass Wasser, welches zwischen die Bohlen 1 und die Unterkonstruktion 2 eindringt, abfließen oder ohne weiteres verdampfen kann, also außerhalb des Kapillaritätsbereichs. Sie liegt vorzugsweise im Bereich einiger Millimeter bis ein Zentimeter.

In der dargestellten Ausführungsform weisen die Abstandshalter 7 an ihren den Bohlen 1 zugewandten Oberseiten, scharfkantige, in Längsrichtung der Abstandshalter 7 und damit quer zur Längsrichtung der Bohlen 1 verlaufende Stege 8 auf. Diese krallen sich beim verschrauben in die Unterseiten der Bohlen 1 und verhindern deren Längsverschiebung z.B. aufgrund starken Trockenschwundes des Holzes.

Die Anbringung der Bohlen 1 auf der Unterkonstruktion 2 erfolgt in an sich bekannter Weise, in dem zunächst die weiteren Abstandshalter 7 eingefügt, so dann die Metallplatte 3 mit den ersten Abstandshaltern 6 so angebracht wird, dass die Metallplatte 3 in die Längsnut 4 einer Bohle 1 eingreift. Dann wird die Schraube 5 durch die Bohrung in der Metallplatte 3 und die Bohrung in dem weiteren Abstandshalter 7 geführt und zunächst lose eingeschraubt, so dass noch keine feste Verspannung entsteht. Anschließend wird die nächste, benachbarte Bohle 1 angesetzt, wobei auch deren Längsnut 4 auf die Metallplatte 3 aufgeschoben wird. So dann kann die Schraube 5 festgezogen werden, wodurch in an sich bekannter Weise eine Verspannung stattfindet. Diese Prozedur wird wiederholt bis alle Bohlen verlegt sind.

Das erfindungsgemäße Befestigungssystem weist einen ausreichend großen Luftspalt zwischen den Bohlen 1 und der Unterkonstruktion 2 auf und verhindert so zusammen mit der relativ schmalen Auflagefläche der länglichen weiteren Abstandshalter 7 die Bildung von Staunässe und damit die Fäulnis. Dadurch wird die Haltbarkeit des Holzes sowohl der Unterkonstruktion 2 als auch der Bohlen 1 gegenüber herkömmlichen Verlegekonstruktionen deutlich erhöht.

Ferner wird durch die flexible Metallscheibe 3 die Bohle auf die Unterkonstruktion festgespannt und ein späteres Nachziehen der Schraube 5 ist aufgrund ihrer freien Lage zwischen benachbarten Bohlen 1 ohne weiteres möglich. Um diese freie Zugänglichkeit der Schraube zu erreichen, ist die Bohrung für die Schraube in der Metallscheibe 3 mittig angeordnet, wobei sich mittig hierbei auf den Abstand zwischen zwei benachbarten Bohlen 1, also in Längsrichtung des weiteren Abstandshalters 7 und senkrecht zu den Längsnuten 4 benachbarter Bohlen 1 bezieht. Ob die Bohrung in Bezug auf die Querrichtung des Abstandshalters 7, also im wesentlichen parallel zu den Bohlen 1 und den Längsnuten 4, mittig in der Metallscheibe 3 angeordnet ist, ist für die Erfindung nicht von Bedeutung. Die Schraube sitzt auch nicht, wie bei manchen anderen bekannten Konstruktion im Holz, so dass kein Schraubenkopf hervorsteht und die entsprechende Verletzungsgefahr und der Holzausriss vermieden werden. Weil im Holz selbst keine Schraubenlöcher sind, bilden sich auch keine feuchten Nester und damit kein Pilzbefall des die Bohlen 1 bildenden Holzes.

Durch die ersten Abstandshalter 6 wird sowohl der Höhenabstand als auch der seitliche Abstand zweier benachbarter Bohlen 1 sichergestellt, so dass sich ein ansprechendes Aussehen und eine zeitsparende, einfache Montage ergeben. Das System ist auch ausgesprochen wartungsfreundlich, weil einzelne Bohlen 1 auch nach der Montage an beliebigen Stellen, also auch im Mittelbereich, ausgetauscht werden können und weil keine Spezialwerkzeuge hierzu erforderlich sind.

Die im beschriebenen Ausführungsbeispiel erwähnte Metallplatte 3 kann auch aus Kunststoff gefertigt sein, ebenso, können alle anderen Konstruktionsteile aus Metall oder Kunststoff oder anderen geeigneten Materialien gefertigt sein. Die verwendeten Schrauben können auch andere Köpfe, z.B. Zylinderköpfe oder Innensechskantköpfe aufweisen.

## Patentansprüche

1. Vorrichtung zur äquidistanten Befestigung von Bohlen (1) auf einer Unterkonstruktion (2), mit einer Platte (3) zum Eingriff in randseitige Nuten (4) zweier benachbarter Bohlen (1), welche eine etwa mittig angeordnete Bohrung zum Durchtritt einer Schraube (5) zum Einschrauben in die Unterkonstruktion (2) aufweist, sowie mit mindestens einem ersten Abstandshalter (6) zum Einhalten des Abstands zwischen der Platte (3) und der Unterkonstruktion, **gekennzeichnet durch** mindestens einen weiteren Abstandshalter (7) zur Einfügung zwischen die Unterseite zweier benachbarter Bohlen (1) und die Unterkonstruktion (2).

2. Vorrichtung nach Anspruch 1, **dadurch gekennzeichnet, dass** der weitere Abstandshalter (7) eine Bohrung zum Durchtritt der Schraube (5) aufweist.

3. Vorrichtung nach einem der voranstehenden Ansprüche, **gekennzeichnet durch** zwei erste, jeweils etwa zylindrisch geformte und beidseitig der Schraube (5) angeordnete Abstandshalter (6), deren Durchmesser mindestens dem Durchmesser des Kopfes der Schraube (5) entspricht und der auch den Abstand benachbarter Bohlen (1) definiert.

4. Vorrichtung nach einem der voranstehenden Ansprüche, **dadurch gekennzeichnet, dass** der oder jeder weitere Abstandshalter (7) als längliche, die beiden benachbarten (1) über wenigstens 20 % ihrer Breiter untergreifende Scheibe ausgebildet ist.

5. Vorrichtung nach einem der voranstehenden Ansprüche, **dadurch gekennzeichnet, dass** die ersten Abstandshalter (6) und die weiteren Abstandshalter (7) aus Kunststoff bestehen.

6. Vorrichtung nach einem der voranstehenden Ansprüche, **dadurch gekennzeichnet, dass** die Platte (3) aus Metall oder Kunststoff besteht.

7. Vorrichtung nach einem der voranstehenden Ansprüche, **dadurch gekennzeichnet, dass** die weiteren Abstandshalter (7) an ihren den Bohlen (1) zugewandten Oberseiten, scharfkantige, in Längsrichtung der Abstandshalter (7) verlaufende Stege (8) aufweisen.

8. Vorrichtung nach einem der voranstehenden Ansprüche, **dadurch gekennzeichnet, dass** die ersten Abstandshalter (6) und die weiteren Abstandshalter (7) einstückig geformt sind.

9. Vorrichtung nach einem der voranstehenden Ansprüche, **dadurch gekennzeichnet, dass** durch die ersten Abstandshalter (6) der seitliche Abstand zweier benachbarter Bohlen (1) sichergestellt wird.

10. Vorrichtung nach einem der voranstehenden Ansprüche, **dadurch gekennzeichnet, dass** die Platte (3) zum Festspannen der Bohlen (1) auf der Unterkonstruktion (2) in Richtung der weiteren Abstandshalter (7) bewegbar ist.
